# EUROPEAN PATENT SPECIFICATION

(11) **EP 4 484 772 B1**
(45) Date of publication and mention of the grant of the patent: **20.08.2025**
(21) Application number: 23182342.8
(22) Date of filing: 29.06.2023
(51) Int. Cl.: F16B 35/06, F16B 25/00

(54) **SCREW**
SCHRAUBE
VIS

(43) Date of publication of application: 01.01.2025
(73) Proprietor: Taiwan Shan Yin International Co., Ltd., Kaohsiung City 82059 (TW)
(72) Inventor: SU, Kou-Tsair, 806 Kaohsiung City (TW); SU, Chen-Long, 800 Kaohsiung City (TW)
(74) Representative: Cabinet Chaillot

(56) References cited:
- US-A1- 2018 245 620
- US-A1- 2023 047 308
- US-B2- 8 348 575

## Description

### BACKGROUND OF THE INVENTION

### 1. Field of the Invention

This invention relates to a screw and relates particularly to a screw capable of scraping burrs which incur a ragged edge of a workpiece, severing fibers, and increasing spaces for accommodating chips.

### 2. Description of the Related Art

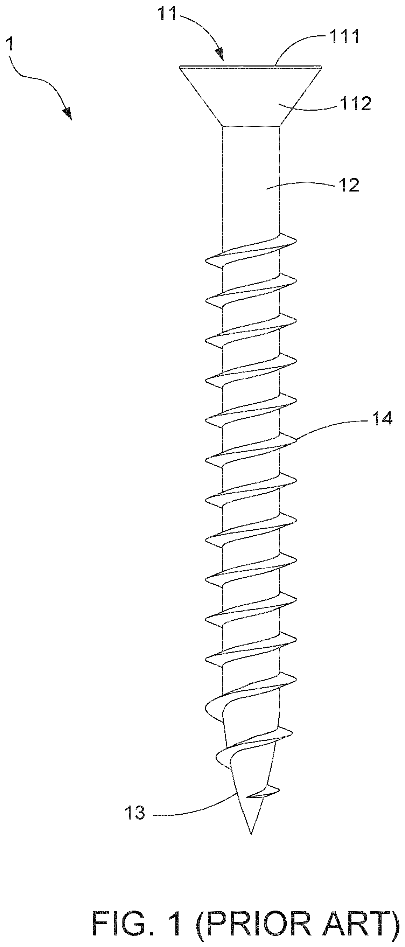

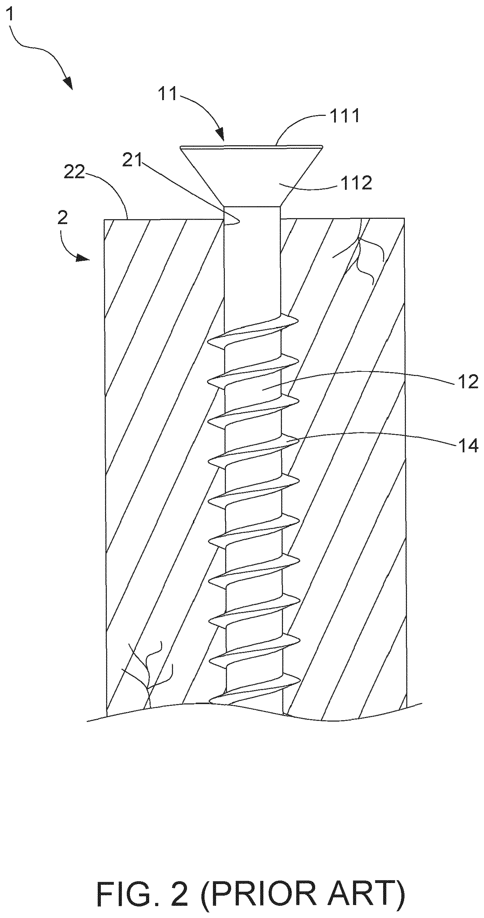

Referring to Figs. **1** and **2****,** a conventional screw **1** comprises a head **11,** a shank **12** extending axially from the head **11,** a drill section **13** disposed on the shank **12** opposite to the head **11,** and a plurality of thread convolutions **14** spirally disposed on the shank **12.** The head **11** has a top surface **111** and a conical surface **112** opposite to the top surface **111.** The conical surface **112** of the head **11** is connected to the shank **12.** During a screwing operation of the screw **1,** the thread convolutions **14** cut into a workpiece **2,** and synchronously create a drilling hole **21** on a surface **22** of the workpiece **2.** While the thread convolutions **14** keep cutting downwards and leading the shank **12** into the workpiece **2** gradually, the conical surface **112** of the head **11** pushes and presses the drilling hole **21** until the top surface **111** is flush with the surface **22** of the workpiece **2** whereby the screwing operation is completed.

However, during the cutting operation of the thread convolutions **14,** burrs easily protrude outwards from the drilling hole **21** to result in a ragged edge of the workpiece **2.** Because the conical surface **112** of the head **11** is formed to be flat and smooth, the conical surface **112** cannot scrape the burrs and smooth the ragged edge of the workpiece **2** effectively. The conical surface **112** also cannot sever but only press fibers of the workpiece **2.** Therefore, the ragged edge formed around the drilling hole **21** cannot be removed. Meanwhile, the head **11** is entangled easily in the unsevered fibers. During the screwing operation of the screw **1,** the head **11** is also hindered from moving downwards caused by the elastic recovery force of the unsevered fibers, and that will increase the screwing resistance. The screw **1** cannot engage with the workpiece **2** tightly. If the screw **1** keeps pressing the unsevered fibers, it may cause that the workpiece **2** cracks, and that requires to be improved.

US 8,348,575B2 discloses a self-countersinking screw which includes a frustoconical shoulder formed on an underside of a screw head, a plurality of generally triangular recesses formed on the frustoconical shoulder, and an alternating sequence of peripheral cutters extending from a periphery of the underside of the screw head. One cutter has an arcuate notch in a cutting face. Another cutter has a rectangular notch in a trailing edge. Each recess has a generally vertical wall substantially in a plane parallel to an axis of the screw.

According to the present invention, a screw according to the preamble of claim 1 is disclosed in US8,348,575B2.

### SUMMARY OF THE INVENTION

The object of this invention is to provide a screw capable of breaking fibers, smoothing burrs which cause a ragged edge, and widening spaces for chips accommodation thereby reducing screwing resistance and fitting the screw with a surface of a workpiece levelly.

The screw of this invention is as defined in claim 1 and comprises a shank, a head and a drill section disposed on two opposite ends of the shank, and a plurality of thread convolutions spirally formed on the shank. The head has a top surface, a conical surface opposite to the top surface and connected to the shank, a plurality of cutting units disposed along an outer edge of the top surface, a plurality of accommodation portions recessedly formed in the conical surface, and a plurality of ridge portions. Every two adjacent ridge portions are separated by one accommodation portion so that the accommodation portions and the ridge portions are arranged by turns and positioned between the cutting units and the shank. Each cutting unit has a first wall defining a first edge, a second wall defining a second edge connected to the first edge, and a third edge formed along a junction of the first wall and the second wall. The second edge connects between one first wall of one cutting unit and another adjacent first wall of another cutting unit to thereby connect the cutting units one after another. Each accommodation portion has a main groove and an auxiliary groove encircling an outer periphery of the main groove so that the auxiliary groove and the main groove are different. The main groove extends in the direction of the shank. An area of each auxiliary groove is smaller than an area of each main groove. Each ridge portion extends along a junction of every two adjacent auxiliary grooves and situated between every two adjacent main grooves. During a screwing operation, the cutting units assist in cutting fibers around a drilling hole of a workpiece to thereby prevent the head from being tangled with twisting fibers and even burrs which cause a ragged edge of the drilling hole of the workpiece. The ridge portions also help cut the fibers into chips and push the chips into the accommodation portions which provide enough spaces for accommodating the chips to thereby attain a tight engagement between the screw and the workpiece, prevent the chips from accumulating around the head unduly, reduce the screwing resistance, and allow the top surface to be flat with a surface of the workpiece.

Preferably, the number of the cutting units is at least two times larger than the number of the accommodation portions.

Preferably, the main grooves are connected to part of the cutting units. The auxiliary grooves are connected to the remainder of the cutting units.

Preferably, the ridge portions extend respectively along a plurality of references lines defined radially from a center of the conical surface.

Preferably, a plurality of references lines are defined radially from a center of the conical surface. Each ridge portion extends between each cutting unit and the shank in a direction which is inclined to each corresponding one of the reference lines.

### BRIEF DESCRIPTION OF THE DRAWINGS

Fig. **1** is a schematic view showing a conventional screw;
Fig. **2** is a schematic view showing a screwing operation of the conventional screw;
Fig. **3** is a perspective view showing a first preferred embodiment of this invention;
Fig. **4** is a cross-sectional view showing the reference lines as seen along the line A-A of Fig. 3;
Fig. **5** is a schematic view showing a screwing operation of the first preferred embodiment; and
Fig. **6** is a schematic view showing a second preferred embodiment of this invention characterized by a plurality of ridge portions each is inclined to the corresponding reference line.

### DETAILED DESCRIPTION OF THE PREFERRED EMBODIMENTS

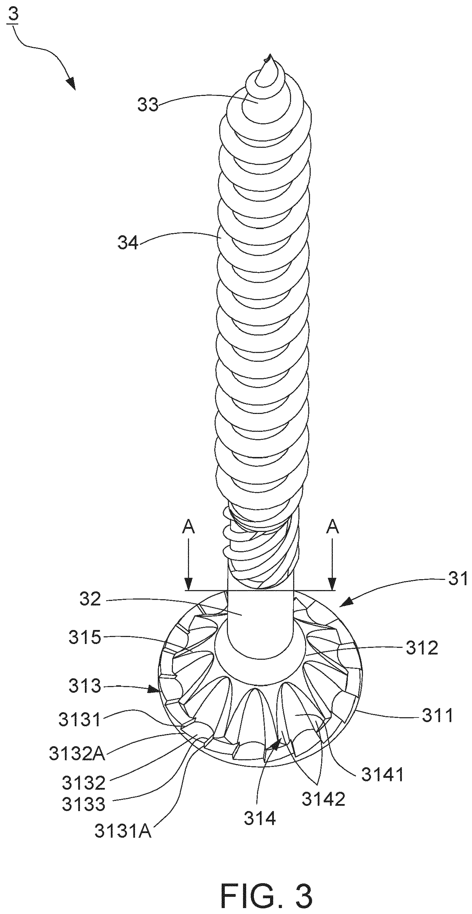

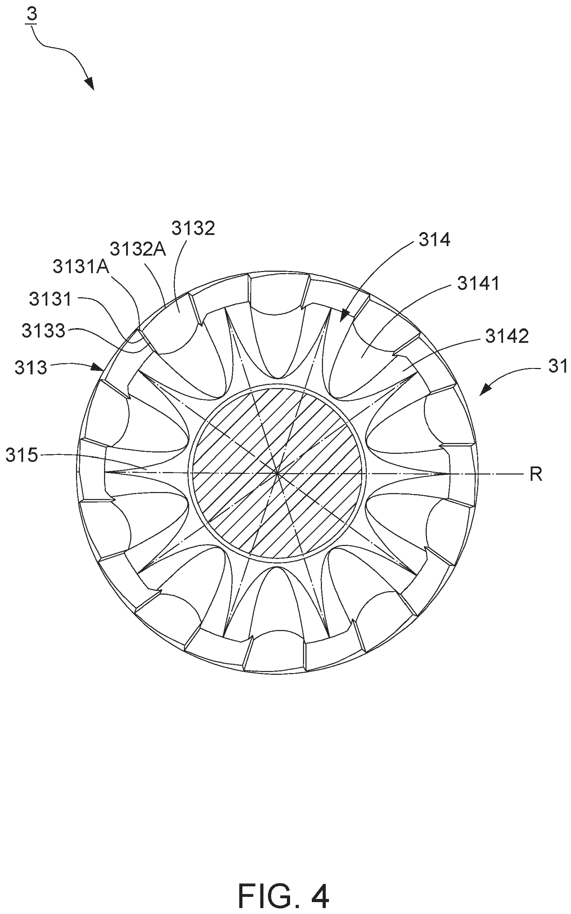

Referring to Fig. **3****,** a first preferred embodiment of a screw **3** of this invention is disclosed. The screw 3 includes a head **31,** a shank **32** having an end connected to the head **31,** a drill section **33** disposed on another end of the shank **32** opposite to the head **31,** and a plurality of thread convolutions **34** spirally disposed on the shank **32.** The head **31** has a top surface **311,** a conical surface **312** opposite to the top surface **311,** a plurality of cutting units **313** connected together in sequence along an outer edge of the top surface **311,** a plurality of accommodation portions **314** recessedly formed in the conical surface **312,** and a plurality of ridge portions **315** protruding outwards from the conical surface **312.** Each ridge portion **315** is formed between every two adjacent accommodation portions **314.** In other words, each accommodation portion **314** is formed between every two adjacent ridge portions **315** so that the accommodation portions **314** and the ridge portions **315** are arranged in an alternating manner. Meanwhile, the accommodation portions **314** and the ridge portions **315** are located between the cutting units **313** and the shank **32.** In this preferred embodiment, a plurality of references lines **R** are defined radially from a center of the conical surface **312** as shown in Fig. **4****.** Each ridge portion **315** extends respectively along the references lines **R.** Each accommodation portion **314** expands gradually from the direction of the shank **32** toward the cutting units **313.** On the contrary, each ridge portion **315** tapers gradually from the direction of the shank **32** toward the cutting units **313.**

Referring to Fig. **3****,** each cutting unit 313 has a first wall **3131,** a second wall **3132** connected to the first wall **3131,** and a third edge **3133** formed along a junction of the first wall **3131** and the second wall **3132.** The first wall **3131** defines a first edge **3131A** which is connected to a second edge **3132A** defined by the second wall **3132.** The second edge **3132A** of each second wall **3132** extends from one first wall **3131** of one cutting unit **313** to another first wall **3131** of another cutting unit **313** adjacent to the one first wall **3131** so that the cutting units **313** are arranged in a continuous connecting manner. The cutting units **313** connects one after another to form a ladder shape. Therefore, a screwing direction of the screw **3** allows the first edges **3131A** and the third edges **3133** to cut fibers effectively. Each accommodation portion **314** has a main groove **3141** and an auxiliary groove **3142** disposed around an outer periphery of the main groove **3141,** and that makes the main groove **3141** and the auxiliary groove **3142** different. The main groove **3141** is recessedly formed in the conical surface **312** and extend toward the direction of the shank **32.** Each ridge portion **315** is formed along a junction of every two adjacent auxiliary grooves **3142** of every two adjacent accommodation portions **314** and situated between every two adjacent main grooves **3141.** In this preferred embodiment, the number of the cutting units **313** is two times larger than the number of the accommodation portions **314** so that the main grooves **3141** are connected to part of the cutting units **313** and the auxiliary grooves **3142** are connected to the remainder of the cutting units **313.** The relation of the number between the cutting units **313** and the accommodation portions **314** can be varied according to needs. An area of each auxiliary groove **3142** is smaller than an area of each main groove **3141.**

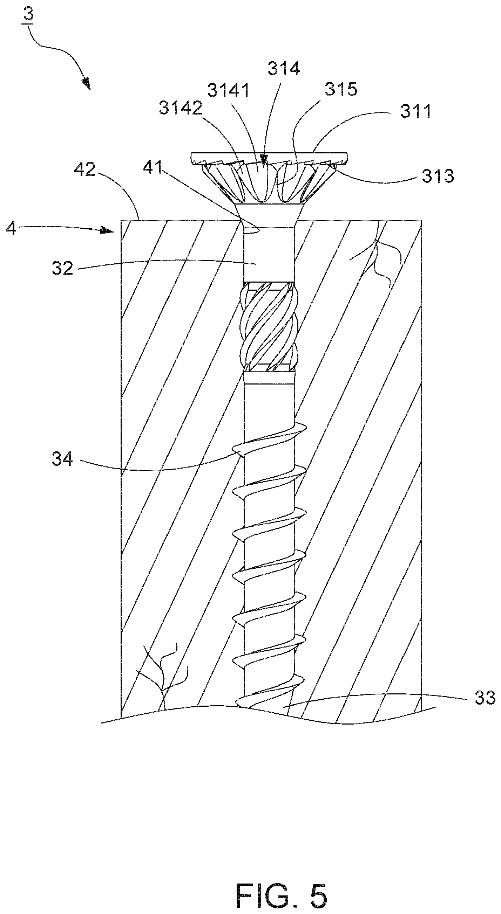

Referring to Figs. **3****,** **4** and **5****,** a screwing operation of the screw **3** begins with positioning the drill section **33** against a surface **42** of a workpiece **4.** The drill section **33** and the thread convolutions **34** cut downwards into the workpiece **4** and form a drilling hole **41** in the workpiece **4.** When the drill section **33** and the thread convolutions **34** cut downwards to further enter the shank **32** into the workpiece **4** through the drilling hole **41** gradually, fibers which are not completely severed and chips which are generated by the cutting of the drill section **33** and the thread convolutions **34** will move outwards gradually along the thread convolutions **34.** The chips and the fibers then accumulate at a periphery of the drilling hole **41** and cause burrs which incur a ragged edge of the workpiece **4,** and synchronously the first edges **3131A,** the second edges **3132A,** and the third edges **3133** of the cutting units **313** are adapted to cut the unsevered fibers into chips to thereby break the fibers effectively, smooth the burrs of the ragged edge of the drilling hole **41,** and prevent the head **31** from being entangled in the fibers. Thus, the screwing resistance is reduced and the screwing operation is accelerated effectively. Meanwhile, the ridge portions **315** can also assist in cutting the fibers, and simultaneously guiding the chips into the accommodation portions **314.** Because each accommodation portion **314** is provided with the main groove **3141** surrounding by the auxiliary groove **3142** whereby the auxiliary groove **3142** is adapted to connect between the main groove **3141** and the corresponding ridge portions **315.** Therefore, the chips pushed by the ridge portions **315** can enter into the main groove **3141** through the auxiliary groove **3142** smoothly and quickly. Further, the accommodation portions **314** enlarge spaces for holding the chips to thereby attain a tight engagement between the screw **3** and the workpiece **4,** prevent the chips from being unduly accumulated around the head **31,** improve the surface flatness of the screw **3** after the screw **3** is embedded in the workpiece **4,** and prevent the workpiece **4** from cracking caused by pressing the unduly accumulated chips.

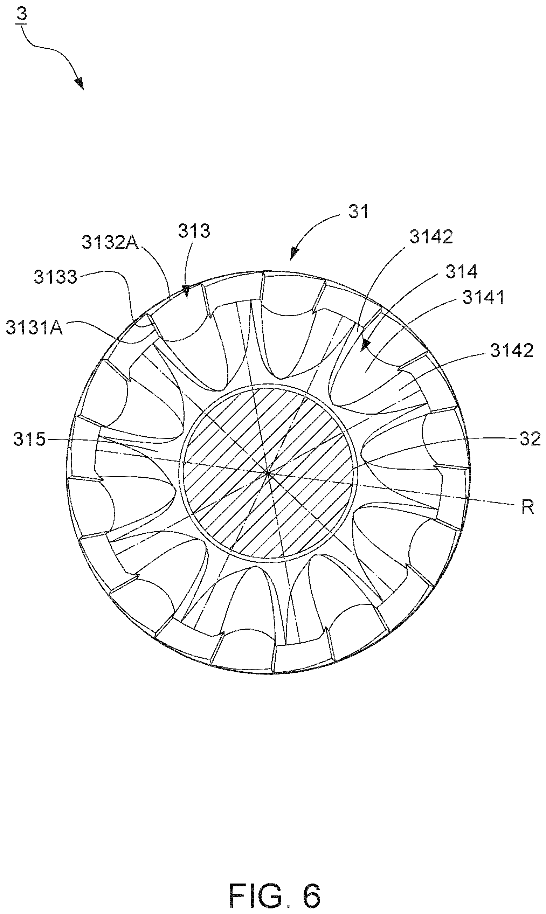

Referring to Fig. **6** shows a second preferred embodiment of the screw **3** of this invention. The correlated elements and the concatenation of elements, the operation and objectives of the second preferred embodiment are the same as those of the first preferred embodiment. This embodiment is characterized in that each ridge portion **315** extends between each cutting unit **313** and the shank **32** in a direction which is inclined to each corresponding one of the reference lines **R.** An inclined direction of the ridge portions **315** can be varied according to needs. Thus, the screwing direction of the screw **3** facilitates the cutting operation of the ridge portions **315** to thereby cut the fibers into chips entirely. The ridge portions **315** further push the chips into the accommodation portions **314** to thereby avoid unduly accumulated chips, decrease the screwing resistance, and allow the screw **3** to be embedded into the workpiece **4** (not shown) levelly and entirely.

To sum up, the screw of this invention takes advantages of the cutting units connected continuously along the outer edge of the top surface to sever the fibers and smooth the burrs causing the ragged edge of the workpiece to thereby prevent the head from entwining with the fibers and reduce the screwing resistance. Meanwhile, the ridge portions assist in cutting the fibers and leading the chips into the accommodation portions. The accommodation portions also help extend spaces for accommodating the chips. Hence, the screw and the workpiece are engaged tightly. The chips will not accumulate around the head unduly. The screwing resistance is reduced. The screw is embedded in the workpiece levelly.

While the embodiments of this invention are shown and described, it is understood that further variations and modifications may be made without departing from the scope of this invention, as defined in the appended claims.

## Claims

1. A screw (3) comprising:
a head (31) including a top surface (311), a conical surface (312) opposite to said top surface (311), a plurality of cutting units (313) extending circumferentially of said top surface (311) at an outer edge thereof, a plurality of accommodation portions (314) recessedly provided in said conical surface (312);
a shank (32) extending axially from said head (31) and including a drill section (33) opposite to said head (31); and
a plurality of thread convolutions (34) spirally disposed on said shank (32);
**characterized in that** said head (31) includes a plurality of ridge portions (315) each situated between every two adjacent accommodation portions (314), said plurality of ridge portions (315) protruding from said conical surface (312), said plurality of accommodation portions (314) and said plurality of ridge portions (315) being situated between said plurality of cutting units (313) and said shank (32) and being arranged in an alternating manner; and
**in that** each of said plurality of cutting units (313) includes a first wall (3131) defining a first edge (3131A), a second wall (3132) defining a second edge (3132A) connected to said first edge (3131A), and a third edge (3133) defined along a junction of said first wall (3131) and said second wall (3132), with said second edge (3132A) extending from one first wall (3131) of one cutting unit (313) to another first wall (3131) of another cutting unit (313) adjacent to said one first wall (3131), and said plurality of cutting units (313) thereby being connected one after another, each of said plurality of accommodation portions (314) including a main groove (3141) recessedly formed in said conical surface (312) and extending in the direction of said shank (32) and an auxiliary groove (3142) formed around an outer periphery of said main groove (3141), an area of said auxiliary groove (3142) being smaller than an area of said main groove (3141) so that said auxiliary groove (3142) is different from said main groove (3141), and each of said plurality of ridge portions (315) thereby being defined along a junction of each adjacent pair of auxiliary grooves (3142) of every two adjacent accommodation portions (314) and situated between every two adjacent main grooves (3141).

2. The screw (3) according to claim 1, wherein the number of said cutting units (313) is at least two times larger than the number of said accommodation portions (314).

3. The screw (3) according to claim 2, wherein said main grooves (3141) are connected to part of said cutting units (313), and said auxiliary grooves (3142) are connected to the remainder of said cutting units (313).

4. The screw (3) according to any one of claims 1 to 3, wherein said plurality of ridge portions (315) extend respectively along a plurality of references lines (R) defined radially from a center of said conical surface (312).

5. The screw (3) according to any one of claims 1 to 3, wherein a plurality of references lines (R) are defined radially from a center of said conical surface (312), each of said plurality of ridge portions (315) extending between each said cutting unit (313) and said shank (32) in a direction, with said direction inclined to each corresponding one of said reference lines.

## Patentansprüche

1. - Schraube (3), umfassend:
einen Kopf (31), der eine obere Fläche (311), eine konische Fläche (312) gegenüber der oberen Fläche (311), eine Vielzahl von Schneideinheiten (313), die sich in Umfangsrichtung der oberen Fläche (311) an einem äußeren Rand davon erstrecken, eine Vielzahl von Aufnahmeabschnitten (314), die in der konischen Fläche (312) vertieft bereitgestellt sind, beinhaltet;
einen Schaft (32), der sich axial von dem Kopf (31) erstreckt und einen dem Kopf (31) gegenüberliegenden Bohrbereich (33) beinhaltet; und
eine Vielzahl von Gewindewindungen (34), die spiralförmig auf dem Schaft (32) angeordnet sind;
**dadurch gekennzeichnet, dass** der Kopf (31) eine Vielzahl von Rippenabschnitten (315) beinhaltet, die sich jeweils zwischen jeweils zwei benachbarten Aufnahmeabschnitten (314) befinden, wobei die Vielzahl von Rippenabschnitten (315) von der konischen Fläche (312) hervorsteht, wobei sich die Vielzahl von Aufnahmeabschnitten (314) und die Vielzahl von Rippenabschnitten (315) zwischen der Vielzahl von Schneideinheiten (313) und dem Schaft (32) befinden und auf eine abwechselnde Weise angeordnet sind; und
dass jede der Vielzahl von Schneideinheiten (313) eine erste Wand (3131), die einen ersten Rand (3131A) definiert, eine zweite Wand (3132), die einen zweiten Rand (3132A) definiert, der mit dem ersten Rand (3131A) verbunden ist, und einen dritten Rand (3133), der entlang einer Verbindung der ersten Wand (3131) und der zweiten Wand (3132) definiert ist, beinhaltet, wobei sich der zweite Rand (3132A) von einer ersten Wand (3131) einer Schneideinheit (313) zu einer anderen ersten Wand (3131) einer anderen Schneideinheit (313) angrenzend an die eine erste Wand (3131) erstreckt, und wobei die Vielzahl von Schneideinheiten (313) dadurch nacheinander verbunden sind, wobei jeder der Vielzahl von Aufnahmeabschnitten (314) eine Hauptnut (3141), die vertieft in der konischen Oberfläche (312) gebildet ist und sich in Richtung des Schafts (32) erstreckt, und eine Hilfsnut (3142), die um einen äußeren Umfang der Hauptnut (3141) gebildet ist, beinhaltet, eine Fläche der Hilfsnut (3142) kleiner ist als eine Fläche der Hauptnut (3141), sodass sich die Hilfsnut (3142) von der Hauptnut (3141) unterscheidet, und wobei jeder der Vielzahl von Rippenabschnitten (315) dadurch entlang einer Verbindung jedes benachbarten Paars von Hilfsnuten (3142) von jeweils zwei angrenzenden Aufnahmeabschnitten (314) definiert ist und sich zwischen jeweils zwei angrenzenden Hauptnuten (3141) befindet.

2. - Schraube (3) nach Anspruch 1, wobei die Anzahl von Schneideinheiten (313) mindestens zweimal größer ist als die Anzahl der Aufnahmeabschnitte (314).

3. - Schraube (3) nach Anspruch 2, wobei die Hauptnuten (3141) mit einem Teil der Schneideinheiten (313) verbunden sind und die Hilfsnuten (3142) mit dem Rest der Schneideinheiten (313) verbunden sind.

4. - Schraube (3) nach einem der Ansprüche 1 bis 3, wobei sich die Vielzahl von Rippenabschnitten (315) jeweils entlang mehrerer Bezugslinien (R) erstreckt, die radial von einer Mitte der konischen Fläche (312) definiert sind.

5. - Schraube (3) nach einem der Ansprüche 1 bis 3, wobei eine Vielzahl von Bezugslinien (R) radial von einer Mitte der konischen Fläche (312) definiert ist, wobei sich jeder der mehreren Rippenabschnitte (315) zwischen jeder Schneideinheit (313) und dem Schaft (32) in einer Richtung erstreckt, wobei die Richtung zu jeder entsprechenden der Bezugslinien geneigt ist.

## Revendications

1. - Vis (3) comprenant :
une tête (31) comprenant une surface supérieure (311), une surface conique (312) opposée à ladite surface supérieure (311), une pluralité d'unités de coupe (313) s'étendant à la périphérie de ladite surface supérieure (311) à un bord extérieur de celle-ci, une pluralité de parties de logement (314) disposées en creux dans ladite surface conique (312) ;
une tige (32) s'étendant axialement à partir de ladite tête (31) et comprenant une section de forage (33) opposée à ladite tête (31) ; et
une pluralité de circonvolutions à filet (34) disposées en spirale sur ladite tige (32) ;
**caractérisée par le fait que** ladite tête (31) comprend une pluralité de parties de crête (315) situées chacune entre à chaque fois deux parties de logement adjacentes (314), ladite pluralité de parties de crête (315) faisant saillie de ladite surface conique (312), ladite pluralité de parties de logement (314) et ladite pluralité de parties de crête (315) étant situées entre ladite pluralité d'unités de coupe (313) et ladite tige (32) et étant disposées de manière alternée ; et
**par le fait que** chacune de ladit pluralité d'unités de coupe (313) comprend une première paroi (3131) définissant un premier bord (3131A), une deuxième paroi (3132) définissant un deuxième bord (3132A) relié audit premier bord (3131A), et un troisième bord (3133) défini le long d'une jonction de ladite première paroi (3131) et de ladite deuxième paroi (3132), avec ledit deuxième bord (3132A) s'étendant d'une première paroi (3131) d'une unité de coupe (313) à une autre première paroi (3131) d'une autre unité de coupe (313) adjacente à ladite première paroi (3131), et ladite pluralités d'unités de coupe (313) étant ainsi reliées l'une après l'autre, chacune de ladite pluralité de parties de logement (314) comprenant une rainure principale (3141) formée en creux dans ladite surface conique (312) et s'étendant dans la direction de ladite tige (32) et une rainure auxiliaire (3142) formée autour d'une périphérie extérieure de ladite rainure principale (3141), une aire de ladite rainure auxiliaire (3142) étant plus petite qu'une aire de ladite rainure principale (3141) de telle sorte que ladite rainure auxiliaire (3142) est différente de ladite rainure principale (3141), et chacune de ladite pluralité de parties de crête (315) étant ainsi définie le long d'une jonction de chaque paire adjacente de rainures auxiliaires (3142) d'à chaque fois deux parties de logement adjacentes (314) et située entre à chaque fois deux rainures principales adjacentes (3141).

2. - Vis (3) selon la revendication 1, dans laquelle le nombre desdites unités de coupe (313) est au moins deux fois plus grand que le nombre desdites parties de logement (314).

3. - Vis (3) selon la revendication 2, dans laquelle lesdites rainures principales (3141) sont reliées à une partie desdites unités de coupe (313), et lesdites rainures auxiliaires (3142) sont reliées au reste desdites unités de coupe (313).

4. - Vis (3) selon l'une quelconque des revendications 1 à 3, dans laquelle ladite pluralité de parties de crête (315) s'étendent respectivement le long d'une pluralité de lignes de référence (R) définies radialement à partir d'un centre de ladite surface conique (312).

5. - Vis (3) selon l'une quelconque des revendications 1 à 3, dans laquelle une pluralité de lignes de référence (R) sont définies radialement à partir d'un centre de ladite surface conique (312), chacune de ladite pluralité de parties de crête (315) s'étendant entre chaque unité de coupe précitée (313) et ladite tige (32) dans une direction, ladite direction étant inclinée par rapport à chaque ligne de référence correspondante desdites lignes de référence.
